# EUROPEAN PATENT SPECIFICATION

(11) **EP 2 398 213 B1**
(45) Date of publication and mention of the grant of the patent: **07.08.2019**
(21) Application number: 10166285.6
(22) Date of filing: 17.06.2010
(51) Int. Cl.: H04M 1/725, G06F 9/445

(54) **Wireless device swap**
Drahtlosvorrichtungswechsel
Échange de dispositif sans fil

(43) Date of publication of application: 21.12.2011
(73) Proprietor: BlackBerry Limited, Waterloo, ON N2K 0A7 (CA)
(72) Inventor: Gisby, Douglas Michael, Highland Park, IL 60035 (US)
(74) Representative: Bryn-Jacobsen, Caelia

(56) References cited:
- EP-A1- 1 947 874
- WO-A1-2006/110989
- WO-A2-2006/062475
- DE-A1- 10 147 503
- US-B2- 7 865 212

## Description

### BACKGROUND

Users may desire or be required to switch from one user equipment (UE) to another UE such as, for example, from an older mobile device to a newer mobile device. A problem that can arise when switching UEs is how to transfer data and settings from one UE to another UE.

Normally, in order to avoid having to re-input all contact information, user settings, user preferences, and other user-specific data, a user may use a desktop or laptop computer to facilitate a swap operation in which this information is transferred from the older UE to the newer UE. The information may be transferred, at least in part, in the form of an archive file. Software on the computer, sometimes known as a desktop manager, is often used to facilitate this swap operation in which data from the sending UE is stored in an archive file on the computer. The archive file, other data, or both may be transferred to the receiving UE from the computer and subsequently installed, configured, or both installed and configured on the UE.

In many cases, the intermediary computer is desired or is necessary for various reasons, such as for providing intermediate storage due to the amount of data being transferred. However, in some cases, use of an intermediary computer to effect a swap operation may not be desirable or convenient. In other cases, use of an intermediary computer to effect a swap operation may not be possible.

EP 1,947,874 relates to methods and apparatus for use in transferring user data from a first ("source") mobile communication device to a second ("target") mobile communication device using a removable memory card are disclosed. The source and target devices may be possessed and/or owned by the same end user. The source device is initially enabled to maintain data synchronization with a host server over a wireless communication network via a first wireless transceiver (e.g. a cellular transceiver) for user data of an application program (e.g. an e-mail application program) associated with the user account. To enable the target device for the communications associated with the user account, the source device is operative to establish a programming session with the target device via a second wireless transceiver (e.g. a short-range wireless transceiver). During the programming session, the source device causes user account data (e.g. at least one encryption/decryption key for the data-synchronized communications) for the user account to be transmitted to the target device via the second wireless transceiver. Preferably, the user account data is encrypted based on a passkey for the programming session. The user data associated with the application program may then be transferred from the source device to the target device via a removable memory card such as a secure digital (SD) card. With this data, the target device is thereby enabled to maintain data synchronization with the host server for the user data of the application program associated with the user account. Advantageously, most if not all of the account switching steps may be facilitated by the end user "on-the-fly" without third-party involvement.

DE 10147503 relates to a method which involves transferring configuration data (KD) from a first, already configured communications terminal (1) to a second communications terminal (2) that is to be configured. The configuration data are transferred from the first terminal to the second terminal via a temporary memory device. The data are combined to form a configuration data record for transfer. Independent claims are also included for the following: a communications terminal for implementing the inventive method, a temporary memory for implementing the inventive method and a converter for use in the inventive method.

The present invention is set out in the independent claims, with some optional features set out in the claims dependent thereto.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is a block diagram illustrating a system for switching wireless devise according to an embodiment of the disclosure.
Figure 2 illustrates a flowchart of a method for switching wireless devices, according to an embodiment of the present disclosure.
Figure 3 is a diagram illustrating a computer or other system suitable for implementing an embodiment of the present disclosure.

### DETAILED DESCRIPTION

It should be understood at the outset that although illustrative implementations of one or more embodiments of the present disclosure are provided below, the disclosed systems and methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

As used herein, the terms "device," "user equipment," and "UE" might in some cases refer to mobile devices such as mobile telephones, personal digital assistants, handheld or laptop computers, devices, and similar devices that have telecommunications capabilities. Such a UE might consist of a UE and its associated memory, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communication session for a user. Also, the terms "user agent," "UA," "user equipment," "UE," "user device" and "user node" might be used synonymously herein.

The present disclosure provides devices and methods for wirelessly transferring the archive file or other information from the first UE to the second UE without using an intermediary computer. In an embodiment, the user initiates a swap operation. A swap application verifies that a memory of the receiving UE has enough space to hold the archive file plus swap data and a swap application. The first UE may wirelessly communicate with a server and obtain permission for the swap operation, as well as possibly other information useful to execute the swap operation. Other information includes, but is not limited to, an encryption key used to secure the swap operation. The archive file may then be transferred wirelessly to the receiving UE. Thus, some or all of the transferred data, including possibly some or all the swap application itself, may be transferred via wireless communication from the first UE to the second UE, with perhaps some or all of the data and swap application being communicated via the server.

Alternatively, the transferred data may be transferred directly from the first UE to the second UE. For example, communication might be established between the first and second UEs, allowing the data, including possibly some or all of the swap application, to be transferred directly over a network, which may be a short-range network. Still further, a mixture of any of the above techniques can be used.

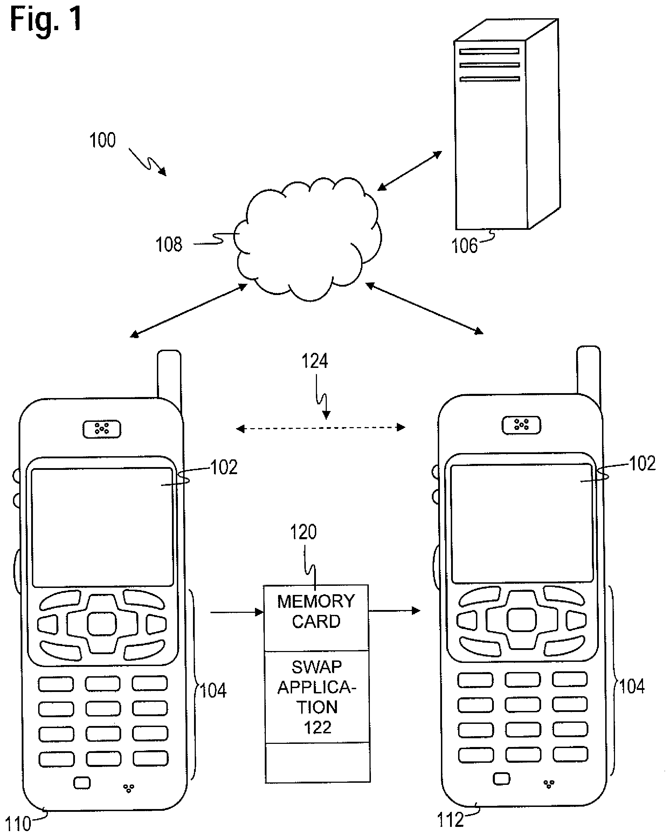

Figure 1 is a diagram illustrating a wireless communication system according to an embodiment of the disclosure. The wireless communications system 100 of Figure 1 includes an embodiment of typical UEs, such as UE 110 and UE 112, that may communicate wirelessly via a network, such as network 108. The UEs 110 and 112 are operable for implementing aspects of the disclosure, but the disclosure should not be limited to these implementations. Though illustrated as mobile phones, the UEs 110 and 112 may take various forms including a wireless handset, a pager, a personal digital assistant (PDA), an email or instant messaging device, a portable computer, a tablet computer, or a laptop computer, or other computing devices such as general purpose computing devices or special-purpose communications devices.

The UEs 110 and 112 may include displays 102. The UEs 110 and 112 may also include touch-sensitive surfaces, keyboards, or other input keys for input by a user, generally referenced at 104. The keyboards may be full or reduced alphanumeric keyboards such as QWERTY, Dvorak, AZERTY, and sequential types, or traditional numeric keypads with alphabet letters associated with telephone keypads. The input keys may include track wheels, exit or escape keys, trackballs, and other navigational or functional keys, which may be inwardly depressed to provide further input function. The UEs 110 and 112 may present options for the user(s) to select, controls for the user(s) to actuate, and cursors or other indicators for the user(s) to direct. The UEs 110 and 112 may further accept data entry from the user(s), including numbers to dial or various parameter values for configuring the operation of the UEs 110 and 112. The UEs 110 and 112 may further execute one or more software or firmware applications in response to user commands. These applications may configure the UEs 110 and 112 to perform various customized functions in response to user interaction. Additionally, the UEs 110 and 112 may be programmed or configured over-the-air, for example from a wireless base station, a wireless access point, or a peer device.

Via the wireless link and the wired network, UE 110 has access to information on various servers, such as a server 106, which could be representative of multiple servers possibly distributed over multiple physical locations. The server 106 may provide content that may be shown on the displays 102. Alternately, the UEs 110 and 112 may access the network 108 through a peer device acting as an intermediary, in a relay type or hop type of connection, or by any other suitable means.

Server 106 may be implemented as different kinds of servers, and may take the form of software. For example, server 106 may represent an enterprise server, internet service, or other software or devices. As mentioned above, UE 112 may be similar to UE 110 but represent a newer model or device, such as a replacement device. The user may desire to switch devices for other reasons as well, but the terms "new" and "older" or "original" and "receiving" may be used to refer to the devices for purposes of simplicity of disclosure only. In an embodiment, both devices may be email or instant messaging devices.

In some embodiments, a user may wish to switch from using the UE 110, such as the older device, to UE 112, which might be the newer device, but may not have access to a desktop manager, direct device-to-device connection, or other means for transferring settings or other information. The embodiments provide a mechanism for switching devices without using these techniques.

Specifically, UE 110 has a memory card 120 that stores device properties, settings, or other desired data in one or more files. The one or more files may be referred-to as an archive. Memory card 120 may also store an application, such as swap application 122. Swap application 122 may be used to restore the archive in a receiving device, such as UE 112, as further described below. As shown in Figure 1, swap application 122 may be stored in the memory card 120. Swap application 122 may be transiently stored on memory card 120, may be downloaded from server 106, may be part of the operating system of UE 110, may be in whole or in part already on the receiving device, such as UE 112, or may be stored partially or completely on any of server 106, UE 110, UE 112, or combinations thereof. Memory card 120 may take the form of an embedded multimedia card (eMMC), multimedia card (MMC), subscriber identity module (SIM), flash card, other memory card, or any other storage device that may be removed from UE 110 and transferred to UE 112. Memory card 120 may be referred to as a portable memory, in some embodiments. An additional memory card, or other form of non-volatile memory, may also be present on UE 110, UE 112, or both.

In an embodiment, the user initiates a swap operation in the UE 110. Initiation may be implemented using any of a number of techniques. For example, the user could select from a set of menus such as Options->Advanced Options->Wireless Swap Menu via a user interface on a display 102 of the UE. This initiation may also be implemented differently, such as but not limited to pressing a button or sequence of buttons on either UE 110 or UE 112, or by issuing a voice command.

In an embodiment, the swap application 122 may verify that the memory card 120 has enough space to hold the archive, swap related data, and the swap application. The swap application 122, while still residing in UE 110, negotiates with a server, which could be server 106, via network 108. The swap application 122 requests that a swap take place between UE 110 and UE 112. The server 106 grants permission, if needed or desired, and transmits any relevant information to UE 110, which might be the older device, or UE 112, which might be the newer device that receives the data. Relevant information may include any portion of swap application 122 that is necessary or desirable to performing the data transfer from UE 110 to UE 112, a personal identification number (PIN) that may be changed as a result of transfer of service from the UE 110 to the UE 112, authorization to perform the data transfer, request for input of a password from the user, or any other information useful to performing the data transfer.

Relevant information could also include an encryption key, possibly temporary, that may be used to authorize or secure the swap. The encryption key could be time locked such that the swap operation must be performed within a certain period of time, such as a few minutes to a few hours, or perhaps longer or shorter periods of time.

Once the server 106 has authorized the data transfer, and provided any needed or desired information to UE 110 or UE 112, the swap application 122 starts the swap process. The swap application 122 may determine the device type for UEs 110 and 112, such as but not limited to Global System for Mobile communications (GSM), Code Division Multiple Access (CDMA), Integrated Digital Enhanced Network (iDEN), or others. Depending on the device type of UEs 110 and 112, the swap application may cause a change in the swap procedure, or may cause a change in the type or formatting of the archive or of other information to be transferred to UE 112. For example, if UE 112 is a GSM device or an iDEN device, then the user will probably also need to swap the SIM card at a point during the swap process. In an embodiment where the swap procedure uses a physical transfer of the SIM card, then some or all of the archive may be stored into the SIM card, or on different or additional memory cards, and then physically transferred to UE 112.

The swap application (possibly in conjunction with a physical transfer of memory) transfers the archive, including possibly any settings, contact information, and user preferences, to UE 112. In an embodiment, the transferred settings or applications are installed on UE 112. The swap application 122 may ensure that the archive and other transferred data are properly installed to UE 112. In an embodiment, all or part of the archive might be provided by the server 106, as well as transferring any additional data, settings, data, PINs, activations, or other information to UE 112 at the request of swap application 122 as part of the swap process. In other embodiments, responsive to one or more of the server 106 and swap application 122 approving the transfer, all or part of the archive might be provided by the UE 110, as well as transferring any additional data, settings, data, PINs, activations, or other information to UE 112 as part of the swap process. Once the archive or additional information is transferred to the UE 112, the newly transferred data is then installed, configured, or stored on the UE112, possibly according to instructions provided by the swap application 122 or the server 106.

In an embodiment, after the swap process is finished, the user may be notified that the process is complete. After the swap process is finished, storage of the swap application 122 may no longer be necessary. In this case, all or part of swap application 122 may be removed from the memory card 120, from the UE 110, UE 112, or both.

In another embodiment, the swap process may be accomplished via a peer-to-peer connection, as shown by arrows 124. In this embodiment, instead of using the memory card 120, the UE 110 establishes the peer-to-peer network with UE 112. Once the peer-to-peer connection has been established, the UE 110 may act as a "desktop manager" of a computer, or may otherwise coordinate and manage the swap process, for example by using the swap application 112. The archive, other data, or both, may be transferred directly from the UE 110 to UE 112 using the peer-to-peer network (as shown at arrows 124).

The peer-to-peer network could be implemented using a number of different techniques. For example, a Bluetooth® or other short range connection could implement the peer-to-peer connection, as could a UTRAN (Universal Mobile Telecommunications System Terrestrial Radio Access Network), an LTE (Long Term Evolution) network, or a Worldwide Interoperability for Microwave Access (WiMAX) network. A peer-to-peer secure wireless local area network (WLAN or Wi-Fi®) may be established between the two devices. A WLAN connection may be particularly fast for devices that support G band. G band is the range of radio frequencies from about 4 GHz to about 6 GHz in the electromagnetic spectrum.

In yet another embodiment, a physical cable connection, such as USB, can be established between the UE 110 and UE 112. In this case, the swap application 122 facilitates the transfer of the archive or other data over the physical connection.

In still another embodiment, after the swap operation is complete, the swap application 122 may audit UE 112 to determine whether the swap operation was successful. The swap application 122 may also prompt the user to take any specific steps that may be required or desired, such as but not limited to physically swapping a SIM card, an eMMC or MMC card, or some other removable memory. When complete, all or part the swap application 122 may be removed from any of the memory card 120, the UE 110, UE 112, or both in order to save memory space.

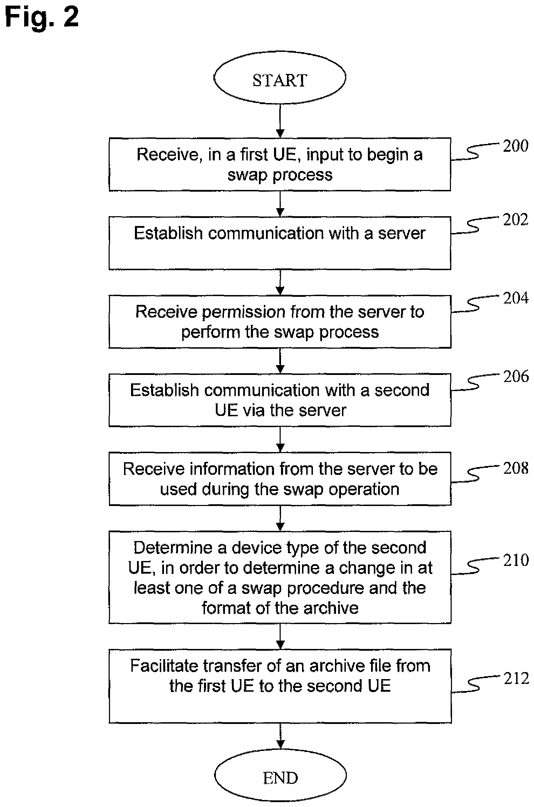

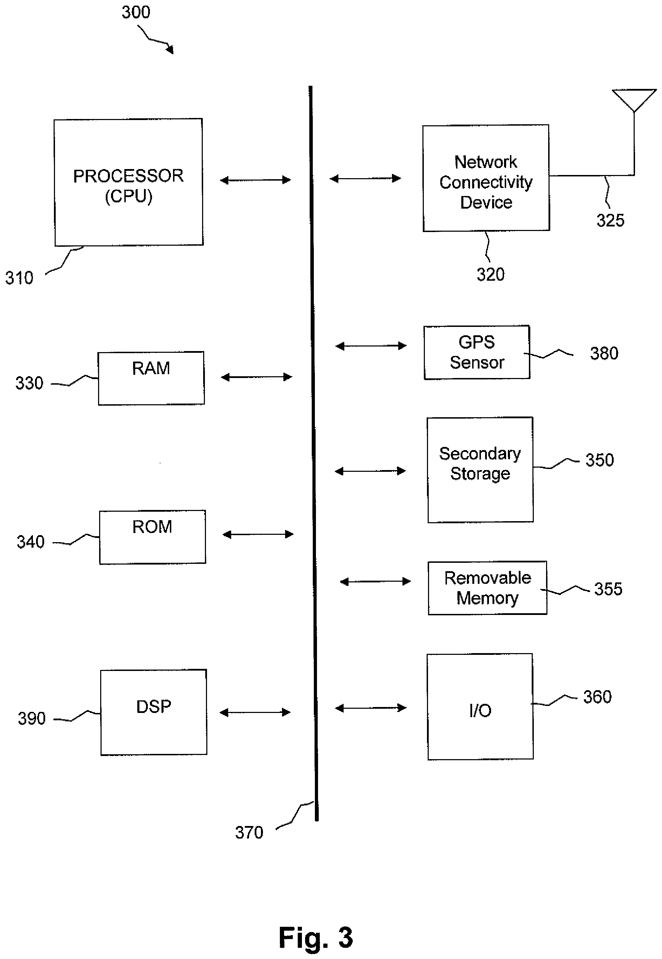

Figure 2 illustrates a flowchart of a method for switching wireless devices, according to an embodiment of the present disclosure. The method shown in Figure 2 may be implemented in a device, such as but not limited to UEs 110 or 112 in Figure 1 or system 300 shown in Figure 3. The method shown in Figure 2 illustrates another embodiment of the methods and devices described with respect to Figure 1. In an embodiment, the method is implemented in an original device, which may be the UE, mobile station, user equipment, or other device capable of wireless communication.

The method begins as a first UE, such as UE 110, receives input to begin a swap process (block 200). Next, the first UE establishes communication with a server (block 202). The UE receives permission from the server to perform the swap process (block 204). The first UE then establishes communication with a second or receiving device, such as UE 112, via the server (block 206).

Optionally, the first UE may receive information from the server to be used during the swap operation (block 208). This information may include, but is not limited to, an encryption key for use in securing the swap operation, information that instructs the swap application how to format or configure the archive file, or other data to be transferred to the second UE from either the first UE or the server. Examples of uses for the encryption key might be to impose a time limit on performing the swap operation, to make decoding the wireless communications difficult, to require a password input from a user to authorize the swap operation, or other uses.

Also optionally, the swap application may determine a device type of the second UE, in order to determine a change in at least one of a swap procedure and the format of the archive (block 210). Finally, the swap application facilitates transfer of an archive file from the first UE to the second UE (block 210). The transfer may occur via the server, may occur via physically swapping one or more memory cards that may contain some or all of the archive to be transferred or the swap application, may occur via direct peer-to-peer wireless transfer, may occur via a physical cable, or may occur via a combination thereof. The process terminates thereafter. However, the process may continue on the second UE by storing, installing, or verifying the transfer or installation of the archive or settings in the second UE.

In an embodiment, the swap application may be stored on a memory comprising one of an eMMC and an MMC. As mentioned above, the swap application may be transferred at least in part to the second UE by physically removing the memory from the first UE and then placing the memory into the second UE.

In an embodiment, the swap application may be transferred at least in part to the second UE by wireless communication via the server. The swap application may be transferred at least in part to both the first UE and the second UE from the server.

In still another embodiment, the swap application may determine a device type of the second UE. In this case, the swap application causes a change in at least one of the swap procedure and the format of the archive depending on the device type. For example, the format of the archive may be changed to a type expected by the second UE. The swap procedure might include prompting a user to physically transfer an memory card to the second UE. The swap procedure may be accomplished using a direct, peer-to-peer network established between the two UEs. The swap procedure might include configuring the archive file or other transferred data in a manner particular to the second UE.

As used herein, the terms "shut off," "switch off," "power off," or "power down" may be used synonymously. However, the term "power down" may refer to various different states, from a device receiving no power to the device receiving sufficient power to enable less than all features available on the device. Likewise, the terms "turn on," "switch on," "power on," or "power up" may be used synonymously. However, the term "power on" may refer to different states, from a device receiving full power (relative to the devices' operating parameters) to the device receiving sufficient power to enable less than all features available on the device, yet more power relative to a "power down" state.

The first and second UEs, such as UEs 110 and 112, as well as other components described above, might include a processing component that is capable of executing instructions related to the actions described above. Figure 3 illustrates an example of a system 300 that includes a processing component 310 suitable for implementing one or more embodiments disclosed herein. In addition to the processor 310 (which may be referred to as a central processor unit or CPU), the system 300 might include network connectivity devices 320, random access memory (RAM) 330, read only memory (ROM) 340, secondary storage 350, removable memory 355, and input/output (I/O) devices 360. Removable memory 355 might, in different embodiments, take the form of other devices, such as those described above. RAM 330, ROM 340, and secondary storage 350 may be non-limiting examples of non-volatile memory. These components might communicate with one another via a bus 370. In some cases, some of these components may not be present or may be combined in various combinations with one another or with other components not shown. These components might be located in a single physical entity or in more than one physical entity. Any actions described herein as being taken by the processor 310 might be taken by the processor 310 alone or by the processor 310 in conjunction with one or more components shown or not shown in the drawing, such as a digital signal processor (DSP) 302. Although the DSP 302 is shown as a separate component, the DSP 302 might be incorporated into the processor 310.

The processor 310 executes instructions, codes, computer programs, or scripts that it might access from the network connectivity devices 320, RAM 330, ROM 340, or secondary storage 350 (which might include various disk-based systems such as hard disk, floppy disk, SIM (subscriber identity module) card, or optical disk, or other storage device). An application or other computer usable program code may be stored on any of these devices, or on removable memory 355. While only one CPU 310 is shown, multiple processors may be present. Thus, while instructions may be discussed as being executed by a processor, the instructions may be executed simultaneously, serially, or otherwise by one or multiple processors. The processor 310 may be implemented as one or more CPU chips.

The network connectivity devices 320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, or other well-known devices for connecting to networks. These network connectivity devices 320 may enable the processor 310 to communicate with the Internet or one or more telecommunications networks or other networks from which the processor 310 might receive information or to which the processor 310 might output information. The network connectivity devices 320 might also include one or more transceiver components 325 capable of transmitting or receiving data wirelessly.

The RAM 330 might be used to store volatile data and perhaps to store instructions that are executed by the processor 310. The ROM 340 is a non-volatile memory device that typically has a smaller memory capacity than the memory capacity of the secondary storage 350. ROM 340 might be used to store instructions and perhaps data that are read during execution of the instructions. Access to both RAM 330 and ROM 340 is typically faster than to secondary storage 350. The secondary storage 350 is typically comprised of one or more disk drives or tape drives and might be used for non-volatile storage of data or as an over-flow data storage device if RAM 330 is not large enough to hold all working data. Secondary storage 350 or eMMC 355 may be used to store programs that are loaded into RAM 330 when such programs are selected for execution.

The I/O devices 360 may include liquid crystal displays (LCDs), touch screen displays, keyboards, keypads, switches, dials, mice, track balls, voice recognizers, card readers, paper tape readers, printers, video monitors, or other well-known input devices. Also, the transceiver 325 might be considered to be a component of the I/O devices 360 instead of or in addition to being a component of the network connectivity devices 320.

Thus, the embodiments provide for a method of performing a swap operation. Communication is established between a first UE and a server. Communication is established between the first UE and a second UE. Permission is received at the first UE from the server to perform the swap operation. The swap application is executed to facilitate transfer of an archive file from the first UE to the second UE.

In another embodiment, the method further includes promoting establishment of a peer-to-peer network between the UE and the second UE, wherein the archive file is transferred over the peer-to-peer network. In still another embodiment, the method further includes receiving, at the first UE, information from the server to be used during the swap operation. In a different embodiment, the information comprises an encryption key used during the swap. In yet another embodiment, the encryption key imposes a time limit on performing the swap operation. Other embodiments are also possible. For example, the encryption key may encrypt communications among the first UE, the server, and the second UE. The swap application may be stored on a memory comprising one of an embedded multimedia card (eMMC) and a multimedia card (MMC). The swap application may be transferred at least in part to the second UE by physically removing the memory from the first UE and then placing the memory into the second UE. The swap application may be transferred at least in part to both the first UE and the second UE by wireless communication via the server.

In still another embodiment the method may include the swap application further determining a device type of the second UE. In this case, the swap application may cause a change in at least one of the swap procedure and the format of the archive depending on the device type. The embodiments also provide for a computer readable storage medium storing a swap application for implementing the methods described above.

The embodiments also provide for a UE including a memory storing a swap application and a processor in communication with the memory. The processor is configured to communicate with a server and with a second UE. The processor is further configured to receive permission from the server to perform a swap operation and to execute the swap application. When executed, the swap application causes an archive file to be transferred from the UE to the second UE. The UE may also be configured to implement any of the processes or embodiments described above.

The embodiments may use the terms "connected," "coupled," or "in communication with." These terms refer both to direct connection, as in physically attached, or indirectly connected, as in a processor connected to a memory via a bus. These terms may also refer to wireless communications.

The embodiments contemplate one or more computer readable media. The term "computer readable medium" refers to a tangible storage device which can store data and from which a processor or other electronic device may read data. The term "non-transitory storage medium" also refers to such a tangible storage device.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure, as defined in the appended claims. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method of performing a swap operation, the method comprising: establishing communication between a first user equipment (110), UE, and a server (106); e
stablishing communication between the first UE and a second UE (112); the method being **characterised in that** it further comprises the step of receiving at the first UE, permission from the server to perform the swap operation; and
executing a swap application (122) configured to enable transfer of an archive file from the first UE to the second UE, wherein the swap application is transferred at least in part to the second UE from the first UE.

2. The method of claim 1 further comprising:
receiving, at the first UE, information from the server to be used during the swap operation.

3. The method of claim 2 wherein the information comprises an encryption key used during the swap operation, wherein the encryption key imposes a time limit on performing the swap operation, and wherein the encryption key encrypts communications among the first UE, the server, and the second UE.

4. The method of any of claims 1 to 3 wherein the swap application is stored on a memory comprising one of an embedded multimedia card, eMMC, and a multimedia card, MMC, wherein the swap application is transferred at least in part to the second UE by physically removing the memory from the first UE and then placing the memory into the second UE.

5. The method of any of claims 1 to 4 wherein the swap application is transferred at least in part to both the first UE and the second UE by wireless communication via the server.

6. The method of any of claims 1 to 5 wherein the swap application further determines a device type of the second UE, and wherein the swap application causes a change in a format of the archive file depending on the device type.

7. A computer readable medium storing a computer program which, when executed, performs a method according to any of claims 1 to 6.

8. A user equipment (110), UE, comprising:
a memory storing a swap application (122); and
a processor in communication with the memory, the processor operable to communicate with a server (106) and with a second UE (112), the processor further operable to receive permission from the server to perform a swap operation and to execute the swap application, the swap application, when executed, causing an archive file to be transferred from the UE to the second UE, wherein the swap application is transferred at least in part to the second UE from the UE.

9. The UE of claim 8 wherein the processor is further operable to:
establish a peer-to-peer network between the UE and the second UE; and
transfer the archive file over the peer-to-peer network.

10. The UE of any of claims 8 or 9 wherein the processor is further operable to receive information from the server that is used during the swap operation.

11. The UE of claim 10 wherein the swap application is transferred at least in part to both the UE and the second UE by wireless communication via the server.

12. The UE of any of claims 10 or 11 wherein the information comprises an encryption key used during the swap operation.

13. The UE of claim 12 wherein the encryption key is arranged to impose a time limit on performing the swap operation, and wherein the encryption key is arranged to encrypt communications among the UE, the server, and the second UE.

14. The UE of any of claims 8 to 13 wherein the memory comprises one or more of a subscriber identify module, SIM, an embedded multimedia card, eMMC, and a multimedia card, MMC, and wherein the swap application is transferred at least in part to the second UE by physically removing the memory from the UE and then placing the memory into the second UE.

15. The UE of any of claims 8 to 14 wherein the swap application, when executed, further arranged to determine a device type of the second UE, and wherein the swap application causes a change in a format of the archive file depending on the device type.

## Patentansprüche

1. Verfahren zum Durchführen eines Wechselvorgangs, wobei das Verfahren umfasst: Aufbau von Kommunikation zwischen einem ersten Benutzer-Equipment (110), UE, und einem Server (106);
Aufbau von Kommunikation zwischen dem ersten UE und einem zweiten UE (112);
wobei das Verfahren **dadurch gekennzeichnet ist, dass** es ferner den Schritt des Empfangens von Freigabe durch den ersten Server am ersten UE umfasst, um den Wechselvorgang durchzuführen; und
Ausführen einer Wechselanwendung (122), dafür ausgelegt, die Übertragung einer Archivdatei von dem ersten UE zu dem zweiten UE zu ermöglichen, wobei die Wechselanwendung mindestens teilweise zu dem zweiten UE vom ersten UE übertragen wird.

2. Verfahren nach Anspruch 1, ferner umfassend:
Empfangen von Information von dem zu verwendenden Server am ersten UE während des Wechselvorgangs.

3. Verfahren nach Anspruch 2, wobei die Information einen während des Wechselvorgangs verwendeten Codierschlüssel umfasst, wobei der Codierschlüssel eine Zeitgrenze für das Durchführen des Wechselvorgangs vorgibt und wobei der Codierschlüssel Kommunikationen zwischen dem ersten UE, dem Server und dem zweiten UE verschlüsselt.

4. Verfahren nach einem der Ansprüche 1 bis 3, wobei die Wechselanwendung auf einem Speicher gespeichert ist, umfassend eine von einer "embedded Multimedia Card", eMMC, und einer "Multimedia Card", MMC, wobei die Wechselanwendung zumindest teilweise zu dem zweiten UE übertragen wird durch physisches Entfernen des Speichers von dem ersten UE und anschließendes Platzieren des Speichers in dem zweiten UE.

5. Verfahren nach einem der Ansprüche 1 bis 4, wobei die Wechselanwendung zumindest teilweise mittels drahtloser Kommunikation über den Server auf sowohl das erste UE als auch das zweite UE übertragen wird.

6. Verfahren nach einem der Ansprüche 1 bis 5, wobei die Wechselanwendung ferner einen Einrichtungstyp des zweiten UE ermittelt und wobei die Wechselanwendung in Abhängigkeit von dem Einrichtungstyp eine Änderung bei einem Format der Archivdatei veranlasst.

7. Rechnerlesbares Medium, speichernd ein Rechnerprogramm, das bei der Ausführung ein Verfahren nach einem der Ansprüche 1 bis 6 durchführt.

8. Benutzer-Equipment (110), UE, umfassend:
einen Speicher, speichernd eine Wechselanwendung (122); und
einen Prozessor in Kommunikation mit dem Speicher, wobei der Prozessor betreibbar ist zum Kommunizieren mit einem Server (106) und mit einem zweiten UE (112), wobei der Prozessor ferner betreibbar ist zum Empfangen einer Freigabe von dem Server zum Durchführen eines Wechselvorgangs und zum Ausführen der Wechselanwendung, wobei die Wechselanwendung bei der Ausführung die Übertragung einer Archivdatei von dem UE zu dem zweiten UE veranlasst, wobei die Wechselanwendung mindestens teilweise zu dem zweiten UE von dem UE übertragen wird.

9. UE nach Anspruch 8, wobei der Prozessor ferner betreibbar ist zum
Aufbau eines Peer-zu-Peer-Netzwerks zwischen dem UE und dem zweiten UE; und
Übertragen der Archivdatei über das Peer-zu-Peer-Netzwerk.

10. UE nach einem der Ansprüche 8 oder 9, wobei der Prozessor ferner betreibbar ist zum Empfangen von Information von dem Server, der während des Wechselvorgangs eingesetzt wird.

11. UE nach Anspruch 10, wobei die Wechselanwendung zumindest teilweise mittels drahtloser Kommunikation über den Server auf sowohl das UE als auch das zweite UE übertragen wird.

12. UE nach einem der Ansprüche 10 oder 11, wobei die Information einen während des Wechselvorgangs eingesetzten Codierschlüssel umfasst.

13. UE nach Anspruch 12, wobei der Codierschlüssel eingerichtet ist, um eine Zeitgrenze für die Durchführung des Wechselvorgangs vorzugeben, und wobei der Codierschlüssel eingerichtet ist, um Kommunikationen zwischen dem UE, dem Server und dem zweiten UE zu verschlüsseln.

14. UE nach einem der Ansprüche 8 bis 13, wobei der Speicher eines oder mehrere von einem Teilnehmer-Identitätsmodul, SIM, einer "embedded Multimedia Card", eMMC, und einer "Multimedia Card", MMC, umfasst und wobei die Wechselanwendung zumindest teilweise zu dem zweiten UE übertragen wird durch physisches Entfernen des Speichers vom UE und anschließendes Platzieren des Speichers in dem zweiten UE.

15. UE nach einem der Ansprüche 8 bis 14, wobei die Wechselanwendung bei der Ausführung ferner eingerichtet ist, um einen Einrichtungstyp des zweiten UE zu ermitteln, und wobei die Wechselanwendung in Abhängigkeit von dem Einrichtungstyp eine Änderung bei einem Format der Archivdatei veranlasst.

## Revendications

1. Procédé permettant d'exécuter une opération de permutation, le procédé comprenant les étapes suivantes :
établir une communication entre un premier équipement utilisateur (110), UE, et un serveur (106) ;
établir une communication entre le premier UE et un deuxième UE (112) ;
le procédé étant **caractérisé en ce qu'**il comprend en outre l'étape consistant à recevoir, au niveau du premier UE, une permission à partir du serveur d'exécuter l'opération de permutation ; et
exécuter une application de permutation (122) configurée pour permettre le transfert d'un fichier d'archive depuis le premier UE vers le deuxième UE, l'application de permutation étant transférée au moins en partie vers le deuxième UE à partir du premier UE.

2. Procédé selon la revendication 1, comprenant en outre :
recevoir, au niveau du premier UE, des informations à partir du serveur devant être utilisées durant l'opération de permutation.

3. Procédé selon la revendication 2, dans lequel les informations comprennent une clé de cryptage utilisée durant l'opération de permutation, la clé de cryptage imposant une limite de temps sur l'exécution de l'opération de permutation, et la clé de cryptage cryptant des communications entre le premier UE, le serveur, et le deuxième UE.

4. Procédé selon l'une quelconque des revendications 1 à 3, dans lequel l'application de permutation est stockée sur une mémoire comprenant un élément parmi une carte multimédia intégrée, eMMC, et une carte multimédia, MMC, l'application de permutation étant transférée au moins en partie vers le deuxième UE en supprimant physiquement la mémoire à partir du premier UE, puis en plaçant la mémoire dans le deuxième UE.

5. Procédé selon l'une quelconque des revendications 1 à 4, dans lequel l'application de permutation est transférée au moins en partie vers le premier UE ainsi que vers le deuxième UE par une communication sans fil par le biais du serveur.

6. Procédé selon l'une quelconque des revendications 1 à 5, dans lequel l'application de permutation détermine en outre un type de dispositif du deuxième UE, et l'application de permutation entraînant un changement de format du fichier d'archive en fonction du type de dispositif.

7. Support lisible par ordinateur stockant un programme informatique qui, lorsqu'il est exécuté, met en oeuvre un procédé selon l'une quelconque des revendications 1 à 6.

8. Equipement utilisateur (110), UE, comprenant :
une mémoire stockant une application de permutation (122) ; et
un processeur en communication avec la mémoire, le processeur permettant de communiquer avec un serveur (106) et avec un deuxième UE (112), le processeur servant en outre à recevoir une permission à partir du serveur d'effectuer une opération de permutation et d'exécuter l'application de permutation, l'application de permutation, lorsqu'elle est exécutée, entraînant le transfert d'un fichier d'archive depuis l'UE vers le deuxième UE, l'application de permutation étant transférée au moins en partie vers le deuxième UE à partir de l'UE.

9. UE selon la revendication 8, dans lequel le processeur est en outre destiné à :
établir un réseau poste à poste entre l'UE et le deuxième UE ; et
transférer le fichier d'archive sur le réseau poste à poste.

10. UE selon l'une quelconque des revendications 8 ou 9, dans lequel le processeur permet en outre de recevoir des informations à partir du serveur qui sont utilisées durant l'opération de permutation.

11. UE selon la revendication 10, dans lequel l'application de permutation est transférée au moins en partie vers l'UE ainsi que vers le deuxième UE par une communication sans fil par le biais du serveur.

12. UE selon l'une quelconque des revendications 10 ou 11, dans lequel les informations comprennent une clé de cryptage utilisée durant l'opération de permutation.

13. UE selon la revendication 12, dans lequel la clé de cryptage est conçue pour imposer une limite de temps sur l'exécution de l'opération de permutation, et la clé de cryptage étant conçue pour crypter une communication entre l'UE, le serveur, et le deuxième UE.

14. UE selon l'une quelconque des revendications 8 à 13, dans lequel la mémoire comprend un ou plusieurs éléments parmi un module d'identité d'abonné, SIM, une carte multimédia intégrée, eMMC, et une carte multimédia, MMC, et l'application de permutation étant transférée au moins en partie vers le deuxième UE en supprimant physiquement la mémoire à partir de l'UE, puis en plaçant la mémoire dans le deuxième UE.

15. UE selon l'une quelconque des revendications 8 à 14, dans lequel l'application de permutation, lorsqu'elle est exécutée, est en outre conçue pour déterminer un type de dispositif du deuxième UE, et l'application de permutation entraînant un changement de format du fichier d'archive en fonction du type de dispositif.
